# EUROPEAN PATENT SPECIFICATION

(11) **EP 1 992 477 B1**
(45) Date of publication and mention of the grant of the patent: **01.11.2017**
(21) Application number: 07715304.7
(22) Date of filing: 02.03.2007
(51) Int. Cl.: B32B 15/09, B05D 7/14, B05D 7/24, C09D 5/00, C09D 7/12, C09D 163/00, C09D 167/00, C09D 175/06, C23C 28/00

(54) **COATED STEEL SHEET, WORKS, PANELS FOR THIN TELEVISIONS AND PROCESS FOR PRODUCTION OF COATED STEEL SHEET**
BESCHICHTETES STAHLBLECH, WERKSTÜCK, PLATTEN FÜR DÜNNE FERNSEHER UND VERFAHREN ZUR HERSTELLUNG VON BESCHICHTETEM STAHLBLECH
TÔLE D'ACIER REVÊTUE, PIÈCE TRAITÉE, ÉCRANS POUR TÉLÉVISIONS PLATES ET PROCÉDÉ POUR LA PRODUCTION D'UNE TÔLE D'ACIER REVÊTUE

(30) Priority: 08.03.2006 JP 2006062012; 31.01.2007 JP 2007022167
(43) Date of publication of application: 19.11.2008
(73) Proprietor: JFE Steel Corporation, Tokyo, 100-0011 (JP)
(72) Inventor: OGATA, Hiroyuki, Tokyo 100-0011 (JP); TADA, Chiyoko, Tokyo 100-0011 (JP); NISHIYAMA, Naoki, Tokyo 100-0011 (JP); FUJIBAYASHI, Nobue, Tokyo 100-0011 (JP)
(74) Representative: Hoffmann Eitle
(86) International application number: PCT/JP2007/054596
(87) International publication number: WO 2007/102593

(56) References cited:
- EP-A1- 0 312 303
- JP-A- 09 085 881
- JP-A- 09 085 881
- JP-A- 2000 178 758
- JP-A- 2000 178 758
- JP-A- 2001 191 448
- JP-A- 2001 191 448
- JP-A- 2003 025 497
- JP-A- 2003 025 497
- JP-A- 2004 034 591
- JP-A- 2004 034 591
- JP-A- 2006 002 171
- JP-A- 2006 002 171
- US-A- 5 272 011

## Description

### Technical Field

The present invention relates to a coated steel sheet that includes a galvanized layer, a chemical conversion coating free from chromium, and a thin film, wherein the galvanized layer and the chemical conversion coating are successively formed on both faces of a steel sheet, and the thin film is formed on the chemical conversion coating at one face of the steel sheet. The present invention also relates to a finished product, a panel for use in thin television sets, and a method for manufacturing the coated steel sheet. A coated steel sheet according to the present invention can be used as a material for household electric appliances, such as panels for use in thin television sets, refrigerators, and fan heaters, as a construction material, and as a material for automobile parts.

### Background Art

In precoated steel sheets, a primer coat paint mainly composed of a modified polyester resin or an epoxy resin is generally applied to an outer surface of a steel sheet to enhance adhesion to the steel sheet and the corrosion resistance of the steel sheet. Furthermore, a polyester or acrylic top coat paint applied to the outer surface can impart stain resistance, decorativeness, scratch resistance, and barrier properties to the steel sheet. Thus, precoated steel sheets require a large number of processes in painting and baking for many hours. From the viewpoint of the rationalization of coating operations and resource conservation, it is desired that film thicknesses be reduced.

However, when a conventional solvent-borne paint for precoated steel sheets is used as a primer coat paint, the resulting film has poor stain resistance and decorativeness. On the other hand, when the conventional solvent-borne paint is used as a top coat paint without using a primer coat paint, the resulting film has insufficient adhesion to a steel sheet and poor corrosion resistance. Powdered paints disadvantageously form a thick film and require a long curing time. Hence, to use a solvent-borne paint that takes the rationalization of coating operations and resource conservation into account to produce a precoated steel sheet having a thin film, the thin film must function as both a primer coat and a top coat and must be formed in a short period of time.

Precoated steel sheets must have various characteristics, such as high hardness, high formability, stain resistance, chemical resistance, water resistance, and corrosion resistance. In particular, when precoated steel sheets are subjected to press working after coating and baking, formability, particularly press formability, is very important. The term "press formability", as used herein, means that a film resists damage in processing, such as folding, drawing, or cutting, of a flat metal sheet. In relatively mild bending, the formability improves with increasing elongation or flexibility of a film. In severe press working, such as drawing, the strength and the scratch resistance, as well as the elongation or flexibility, of a film are also important to resist the stress caused by deformation or processing.

In a situation in which such characteristics are required for precoated steel sheets, for example, Patent Document 1 proposes a paint composition that is composed of a specific polyester resin, a melamine resin (curing agent), and other components and that can form a film having excellent hardness, stain resistance, and weather resistance. Patent Document 1 also proposes a coated steel sheet manufactured using the paint composition. Patent Document 2 proposes a coated steel sheet in which a paint composition mainly composed of a polyester resin, a melamine resin (curing agent), an anticorrosive pigment, and organic polymer fine particles is applied only one time to achieve satisfactory formability, corrosion resistance, adhesiveness, impact resistance, scratch resistance, and decorativeness.

In the coated steel sheets described in Patent Documents 1 and 2, a chromate film containing chromium, which is environmentally undesirable, is formed as a chemical conversion coating. Furthermore, the polyester resins are not designed to form a thin film having a sufficient strength to resist a stress caused by severe press working, such as drawing, thus resulting in poor press formability. In addition, when a coated steel sheet is used in a panel for use in thin television sets, the back side of the coated steel sheet, which corresponds to an inner surface of a pressed panel, must be electrically conductive, because welding or electromagnetic shielding is required. However, Patent Documents 1 and 2 do not take it into account.
Patent Document 1: Japanese Unexamined Patent Application Publication No. 8-100150
Patent Document 2: Japanese Unexamined Patent Application Publication No. 9-111183

### Disclosure of Invention

The subject-matter of the present invention is defined in claims 1-19 as attached. Accordingly, it is an object of the present invention to provide a coated steel sheet that is resistant to film cracking in severe press working, such as drawing, can be produced at high speed, and has excellent bending workability, press formability, film adhesiveness after processing, solvent resistance, chemical resistance, stain resistance, weather resistance, electrical conductivity, and corrosion resistance, good surface appearance, and sufficient film hardness. It is another object of the present invention to provide a finished product, a panel for use in thin television sets, and a method for manufacturing the coated steel sheet.

As a result of repeated investigations to produce a coated steel sheet having a high-performance thin film, the present inventors have found that a coated steel sheet that has excellent bending workability, press formability, film adhesiveness after processing, solvent resistance, chemical resistance, stain resistance, weather resistance, electrical conductivity, and corrosion resistance, good surface appearance, and sufficient film hardness can be produced by successively forming a galvanized layer and a chemical conversion coating free from chromium on both faces of a steel sheet, and forming a thin film, which contains a polyester resin cured with a cross-linker and specific resin particles, on the chemical conversion coating at one face of the steel sheet, wherein the other face of the steel sheet preferably has an excellent electrical conductivity, as indicated by a conduction load of 500 g or less.

The present invention has been accomplished on the basis of these findings, and the summary of the present invention is as follows:
(1) A coated steel sheet, including:
   galvanized layers formed on a first face and a second face of a steel sheet;
   chemical conversion coatings free from chromium formed on the galvanized layers; and
   a monolayer film formed on the chemical conversion coating on the first face side of the steel sheet, the monolayer film including a polyester resin cured with a cross-linker and resin particles having an average particle size in the range of 3 to 40 µm, a glass transition temperature in the range of 70°C to 200°C, and hardness higher than that of the polyester resin.
(2) The coated steel sheet according to (1), wherein the chemical conversion coatings comprise finely divided silica and at least one selected from the group consisting of phosphoric acids and phosphate compounds.
(3) The coated steel sheet according to (1), wherein the monolayer film has a thickness of 10 µm or less.
(4) The coated steel sheet according to (2), wherein the monolayer film has a thickness in the range of 2 to 10 µm.
(5) The coated steel sheet according to (1), wherein the cross-linker is one selected from the group consisting of melamine resins, ureas, and isocyanates.
(6) The coated steel sheet according to (1), wherein the polyester resin is one selected from the group consisting of epoxy-modified polyester resins, urethane-modified polyesters, and acrylic polyesters.
(7) The coated steel sheet according to (6), wherein the polyester resin is an epoxy-modified polyester resin.
(8) The coated steel sheet according to (1), wherein the resin particles have a glass transition temperature 20°C to 130°C higher than that of the polyester resin.
(9) The coated steel sheet according to (1), wherein the resin particles are formed of one selected from the group consisting of acrylic resins and nylon resins.
(10) The coated steel sheet according to (1), wherein the resin particles have an average particle size of more than 0.5 but not more than 2 times the thickness of the monolayer film.
(11) The coated steel sheet according to (1), wherein the content of the resin particles in the monolayer film ranges from 5% to 20% by mass.
(12) The coated steel sheet according to (1), further comprising a primer coat between the chemical conversion coating and the monolayer film on the first face side of the steel sheet.
(13) The coated steel sheet according to (12), wherein the primer coat is formed by applying a primer coat paint to the chemical conversion coating, the primer coat paint including an anticorrosive pigment and a resin selected from the group consisting of polyester resins, epoxy-modified polyester resins, epoxy resins, phenoxy resins, and amine-modified epoxy resins.
(14) The coated steel sheet according to (12), wherein the primer coat has a thickness in the range of 1 to 5 µm.
(15) The coated steel sheet according to (1), further comprising an organic resin layer on the chemical conversion coating on the second face side of the steel sheet.
(16) The coated steel sheet according to (15), wherein the organic resin layer is formed of an epoxy resin, an amine-modified epoxy resin, or a polyester resin.
(17) The coated steel sheet according to (15), wherein the organic resin layer has a thickness in the range of 0.1 to 1 µm.
(18) A finished product manufactured by pressing the coated steel sheet according to (1) such that the first face of the coated steel sheet becomes a raised outer surface.
(19) A panel for use in thin television sets, manufactured by pressing the coated steel sheet according to (1) such that the first face of the coated steel sheet becomes a raised outer surface.
(20) A method for manufacturing a coated steel sheet, including the steps of:
   forming a galvanized layer on a first face and a second face of a steel sheet;
   forming a chemical conversion coating free from chromium on the galvanized layers formed on the first face and the second face;
   applying a paint composition on the chemical conversion coating on the first face side of the steel sheet, the paint composition including a polyester resin, resin particles, and a cross-linker, the resin particles having an average particle size in the range of 3 to 40 µm, a glass transition temperature in the range of 70°C to 200°C, and hardness higher than that of the polyester resin; and
   heating the paint composition applied to the chemical conversion coating on the first face side of the steel sheet at a steel sheet temperature in the range of 170°C to 250°C for 20 to 90 seconds to form a cured monolayer film on the chemical conversion coating.
(21) The method for manufacturing a coated steel sheet according to (19), further comprising the step of forming a primer coat on the chemical conversion coating on the first face side of the steel sheet, between the step of forming chemical conversion coatings and the step of applying a paint composition.

According to the present invention, a coated steel sheet is produced by successively forming a galvanized layer and a chemical conversion coating free from chromium on both faces of a steel sheet, and forming a thin film on the chemical conversion coating at one face of the steel sheet, wherein the other face of the steel sheet is preferably electrically conductive. Thus, the present invention can provide a coated steel sheet that is resistant to film cracking in severe press working, such as drawing, can be produced at high speed, and has excellent bending workability, press formability, film adhesiveness after processing, solvent resistance, chemical resistance, stain resistance, weather resistance, electrical conductivity, and corrosion resistance, good surface appearance, and sufficient film hardness. The present invention can also provide a finished product, a panel for use in thin television sets, and a method for manufacturing the coated steel sheet.

### Best Modes for Carrying Out the Invention

A coated steel sheet according to the present invention is produced by successively forming a galvanized layer and a chemical conversion coating free from chromium on both faces of a steel sheet, and forming a monolayer film on the chemical conversion coating at one face of the steel sheet. The monolayer film contains a polyester resin cured with a cross-linker and resin particles. The resin particles have an average particle size in the range of 3 to 40 µm, a glass transition temperature in the range of 70°C to 200°C, and hardness higher than that of the polyester resin.

### (Galvanization)

Examples of a galvanized steel sheet, which is a base steel sheet of a coated steel sheet according to the present invention, include hot-dip galvanized steel sheets, electrolytic zinc-coated steel sheets, galvannealed steel sheets, aluminum-zinc alloy coated steel sheets (for example, hot-dip zinc-aluminum (55% by mass) alloy coated steel sheets and hot-dip zinc-aluminum (5% by mass) alloy coated steel sheets), iron-zinc alloy coated steel sheets, nickel-zinc alloy coated steel sheets, and nickel-zinc alloy coated steel sheets after blackening treatment.

### (Chemical Conversion Coating)

A chemical conversion coating is formed on both faces of a galvanized steel sheet having a galvanized layer. The chemical conversion coating is free from chromium from an environmental point of view. The chemical conversion coating is formed primarily in order to improve the adhesion between the galvanized layer and the monolayer film. The chemical conversion coating may be any coating that can improve the adhesiveness and that can more preferably improve the corrosion resistance. Preferably, the chemical conversion coating contains finely divided silica in view of adhesiveness and corrosion resistance, and a phosphoric acid and/or a phosphate compound in view of corrosion resistance. The finely divided silica may be wet silica or dry silica, and is preferably finely divided silica that can greatly improve the adhesiveness, particularly dry silica. The phosphoric acid and the phosphate compound may be at least one selected from the group consisting of metallic salts and compounds of orthophosphoric acid, diphosphoric acid, and polyphosphoric acid. The chemical conversion coating may contain a resin, such as an acrylic resin, and a silane coupling agent.

### (Monolayer Film)

A monolayer film is formed on the chemical conversion coating at one face of the galvanized steel sheet. The monolayer film contains a polyester resin cured with a cross-linker and resin particles having an average particle size in the range of 3 to 40 µm, a glass transition temperature in the range of 70°C to 200°C, and hardness higher than that of the polyester resin.

### (A) Cross-linker

The cross-linker for curing the polyester resin is preferably a melamine resin, urea, or an isocyanate in order to balance the press formability and the chemical resistance. The melamine resin is produced by etherifying part or all of the methylol groups of a condensation product between melamine and formaldehyde with a lower alcohol, such as methanol, ethanol, or butanol.

### (B) Polyester Resin

A polyester resin can be cured with a cross-linker, and thereby improves the toughness of a film and imparts excellent press formability. The polyester resin used herein has a number-average molecular weight in the range of 5000 to 25000, preferably in the range of 10000 to 22000, a glass transition temperature Tg in the range of 20°C to 80°C, preferably in the range of 50°C to 70°C, a hydroxyl value in the range of 3 to 30 mgKOH/g, preferably in the range of 4 to 20 mgKOH/g, and an acid value in the range of 0 to 10 mgKOH/g, preferably in the range of 3 to 9 mgKOH/g.

A polyester resin having a number-average molecular weight of less than 5000 may result in insufficient film elongation, poor press formability, and poor film adhesiveness after processing. A polyester resin having a number-average molecular weight of more than 25000 results in a paint composition of high viscosity and therefore requires excessive diluting solvent. This reduces the percentage of the polyester resin in the paint composition. Thus, the polyester resin may not appropriately form a film. In addition, the polyester resin may have significantly reduced compatibility with other components.

A polyester resin having a glass transition temperature Tg of less than 20°C may result in insufficient film toughness, poor press formability, low film hardness, and poor film adhesiveness after processing. A polyester resin having a glass transition temperature Tg of more than 80°C may result in insufficient bending workability. A polyester resin having a hydroxyl value of less than 3 mgKOH/g may result in insufficient crosslinking reaction and therefore low film hardness. On the other hand, a polyester resin having a hydroxyl value of more than 30 mgKOH/g may result in insufficient formability. A polyester resin having an acid value of more than 10 mgKOH/g may result in reduced compatibility with other components.

The polyester resin may be produced by a common polycondensation reaction between a polybasic acid and a polyhydric alcohol. If the resulting polyester resin has a very small number of free carboxyl groups and a low acid value, part of hydroxyl groups of the polyester resin may be converted into carboxylic groups to increase the acid value to at least 3 mgKOH/g (but less than 10 mgKOH/g). This further increases the adhesion to an underlying layer and the curing rate. Typical examples of the polybasic acid include terephthalic acid, isophthalic acid, phthalic acid, succinic acid, adipic acid, sebacic acid, malonic acid, oxalic acid, and trimellitic acid, and lower alkyl esters and acid anhydrides thereof.

Preferably, the polyester resin is an epoxy-modified polyester resin. More preferably, 30% to 60% by mass of the polyhydric alcohol components of the epoxy-modified polyester resin is bisphenol. Such an epoxy-modified polyester resin can form a tough and elastic film, and further improve the press formability and the chemical resistance.

When the percentage of bisphenol A is less than 30% by mass of the polyhydric alcohol components, the resulting film may have insufficient toughness, low chemical resistance, and poor press formability. When the percentage of bisphenol A is more than 60% by mass, the resulting monolayer film may become hard and have poor press formability. Typical polyhydric alcohol components other than bisphenol A include ethylene glycol, 1,4-butanediol, 1,6-hexanediol, diethylene glycol, and neopentyl glycol. Furthermore, cyclohexanedimethanol may be used to control the film toughness.

In a suitable composition containing an epoxy-modified polyester resin as the polyester resin and a melamine resin as the cross-linker, the amount of melamine resin is in the range of 5 to 30 parts by mass, preferably in the range of 10 to 25 parts by mass, per 100 parts by mass of the epoxy-modified polyester resin, on the basis of solid content. When the amount of melamine resin is less than 5 parts by mass per 100 parts by mass of the epoxy-modified polyester resin, the film hardness and the stain resistance may deteriorate. When the amount of melamine resin is more than 30 parts by mass, the formability and the film adhesiveness after processing may deteriorate.

### (C) Resin Particles

The resin particles in the monolayer film has an average particle size in the range of 3 to 40 µm, a glass transition temperature in the range of 70°C to 200°C, and hardness higher than that of the polyester resin. The resin particles having an average particle size in the range of 3 to 40 µm, a glass transition temperature in the range of 70°C to 200°C, and high hardness can improve the press formability while maintaining the bending workability. The average particle size, the glass transition temperature, and the hardness of the resin particles are defined as described above for the following reasons.

The resin particles function as a lubricant or prevent the underlying chemical conversion coating from coming into contact with a metal mold, thus improving the press formability. Resin particles having an average particle size of less than 3 µm may not function as a lubricant or may not prevent the chemical conversion coating from coming into contact with a metal mold, and therefore do not improve the press formability. On the other hand, resin particles having an average particle size of more than 40 µm may flake off from the monolayer film, thus increasing the sliding resistance and degrading the press formability. Thus, the resin particles have an average particle size in the range of 3 to 40 µm. Resin particles having a glass transition temperature of less than 70°C have insufficient hardness. On the other hand, resin particles having a glass transition temperature of more than 120°C function as a sliding resistance material. In both cases, the press formability deteriorates.

The term "average particle size of resin particles", as used herein, refers to a mean value of average diameters of each resin particle observed in at least three fields in a cross-section of a film with an optical microscope. The average diameter of a resin particle is calculated from the maximum diameter and a diameter orthogonal to the maximum diameter of the particle.

The resin particles must have hardness higher than that of the polyester resin, which is a base layer of the monolayer film. According to the present invention, the resin particles having high hardness in the monolayer film can prevent the chemical conversion coating or the galvanized layer from coming into contact with a metal mold and being damaged by the metal mold during press working. Resin particles having hardness equal to or less than that of the polyester resin cannot have such an effect.

The "hardness" of the resin particles and the polyester resin can be evaluated by their Tg. More specifically, the hardness increases with increasing Tg.

However, when the hardness of the resin particles is excessively higher than that of the polyester resin, a stress concentrates at interfaces between the resin particles and the polyester resin in the monolayer film during a molding process. Thus, the resin particles may flake off from the film. Hence, the difference in Tg between the resin particles and the polyester resin preferably ranges from 20°C to 130°C.

To particularly improve the press formability, the content of the resin particles in the film preferably ranges from 5% to 20% by mass.

The resin type of the resin particles may be an acrylic resin or a nylon resin. In particular, a nylon resin is preferred, because the nylon resin is suitable for roll coating.

To further improve the press formability, the monolayer film suitably contains polyolefin wax, microcrystalline wax, or fluorinated wax. Preferably, the softening points of the polyolefin wax and the microcrystalline wax and the degree of crystallinity of the fluorinated wax are appropriately selected. For example, the polyolefin wax or the microcrystalline wax preferably has a softening point in the range of 70°C to 140°C. Polyolefin wax or microcrystalline wax having a softening point of less than 70°C may melt during the storage of a coil or when used as a back panel. On the other hand, polyolefin wax or microcrystalline wax having a softening point of more than 140°C does not significantly improve a sliding characteristic in press working.

Preferably, the wax content in the film ranges from 0.4% to 4.0% by mass. Less than 0.4% by mass of wax in the film is insufficient to further improve the press formability. On the other hand, more than 4.0% by mass of wax has almost saturated effects and is unfavorable in terms of cost.

If necessary, the monolayer film may further contain titanium oxide or carbon black for coloring and an aluminum powder in view of decorativeness.

Preferably, the monolayer film has a thickness of 10 µm or less. A coated steel sheet according to the present invention employs a thin-film design. Thus, the present invention produces significant effects when the monolayer film has a thickness of 10 µm or less. In other words, according to the present invention, the monolayer film can resist severe press working even at a thickness of 10 µm or less. Such a thin-film design is also greatly cost-effective. While the dry thickness of the monolayer film has no particular lower limit, the dry thickness is preferably at least 2 µm in consideration of the average particle size of the resin particles.

From the viewpoint of the press formability of the monolayer film, the average particle size of the resin particles is preferably more than 0.5 but not more than 2 times and more preferably 1 to 2 times the thickness of the monolayer film.

Preferably, a paint composition may be applied and heated to form a monolayer film. If necessary, the paint composition may further contain a curing catalyst to promote the crosslinking reaction of the resin. Typical examples of the curing catalyst include acids and salts thereof, such as p-toluenesulfonic acid, dodecylbenzenesulfonic acid, dinonylnaphthalenesulfonic acid, dinonylnaphthalenedisulfonic acid, and amine salts thereof. The curing catalyst allows a rapid crosslinking reaction and improves productivity.

The appropriate amount of the curing catalyst ranges from 0.1 to 2 parts by mass per 100 parts by mass of the polyester resin and the melamine resin in total, on the basis of solid content. The paint composition according to the present invention can further contain additives commonly used in the paint industry, such as a pigment, a lubricant, a dispersing agent, an antioxidant, a leveling agent, and an anti-foaming agent, if necessary.

Preferably, the paint composition is dissolved in an organic solvent when used. The organic solvent may be any solvent commonly used in paint. Examples of the organic solvent include methyl ethyl ketone, methyl isobutyl ketone, cyclohexanone, toluene, xylene, methyl cellosolve, butyl cellosolve, cellosolve acetate, butyl cellosolve acetate, Carbitol, ethyl carbitol, butyl carbitol, ethyl acetate, butyl acetate, petroleum ether, and petroleum naphtha. The suitable amount of the organic solvent is such an amount that the viscosity of paint ranges from 40 to 200 seconds (with Ford cup No.4 at room temperature) in accordance with coating workability.

A paint composition according to the present invention as described above may be prepared by blending the components appropriately using a common mixer, such as a sand mill, a ball mill, or a blender, or a kneader. The degree of pigment dispersion of the paint thus prepared is suitably 25 µm or less, as determined by a grind gauge A method.

Preferably, a primer coat is formed under the monolayer film primarily in order to further improve the chemical resistance. Preferably, the primer coat is formed by applying a primer coat paint that contains a polyester resin, an epoxy-modified polyester resin, an epoxy resin, a phenoxy resin, or an amine-modified epoxy resin, and an anticorrosive pigment, such as Ca ion exchanged silica, Mg-treated aluminum triphosphate, Ca-treated aluminum triphosphate, or Mg ion exchanged silica. Preferably, the primer coat has flexibility to improve the bending workability. Preferably, a polyester resin in the primer coat paint has a glass transition temperature in the range of 10°C to 80°C. Preferably, the primer coat paint further contains Ca ion exchanged silica, Mg-treated aluminum triphosphate, Ca-treated aluminum triphosphate, or Mg ion exchanged silica to further improve the corrosion resistance. The content of the anticorrosive pigment preferably ranges from 10% to 60% by mass.

The primer coat having a thickness of less than 1 µm has poor corrosion resistance owing to lack of anticorrosive pigment. On the other hand, the primer coat having a thickness of more than 5 µm has poor bending workability. Thus, the primer coat preferably has a thickness in the range of 1 to 5 µm.

According to the present invention, not only the monolayer film is formed on the chemical conversion coating or even on the primer coat formed on the chemical conversion coating at one face of the steel sheet, but also the chemical conversion film free from chromium is formed on the other face of the steel sheet. Thus, a coated steel sheet according to the present invention can have the corrosion resistance and the adhesiveness comparable to those of conventional chromate films, and excellent electrical conductivity. The electrical conductivity is preferably 500 g or less, as determined by the conduction load, in terms of electromagnetic shielding. The conduction load is a minimum load at which the surface resistivity determined with a low resistivity meter described below is 10⁻⁴ ohms or less.

For applications that require moderate corrosion resistance, the other face of the coated steel sheet may have only the chemical conversion film free from chromium. Thus, the coated steel sheet exhibits excellent electromagnetic shielding.

For applications that require high corrosion resistance, the other face of the coated steel sheet preferably has the organic resin layer on the chemical conversion film to improve the corrosion resistance. The resin type of the organic resin layer is preferably an epoxy resin, an amine-modified epoxy resin, or a polyester resin. The organic resin layer preferably contains an anticorrosive pigment, such as Ca ion exchanged silica, Mg-treated aluminum triphosphate, Ca-treated aluminum triphosphate, or Mg ion exchanged silica, to further improve the corrosion resistance.

The thickness of the organic resin layer is a mean value of measurements at 15 points or more, 3 points in each of at least 5 fields, observed in a cross-section of the layer with an optical microscope or an electron microscope.

The thicknesses of the chemical conversion coating and the monolayer film are also determined in the same way as in the organic resin layer. The anticorrosive pigment or the resin particles exposed from the coating or the film are not included in the thickness.

The organic resin layer having a thickness of less than 0.1 µm has poor corrosion resistance. On the other hand, the organic resin layer having a thickness of more than 1 µm exhibits poor electromagnetic shielding. Thus, the organic resin layer preferably has a thickness in the range of 0.1 to 1 µm.

The coated steel sheet is suitable as a member that is subjected to at least one press working selected from the group consisting of deep drawing, bulging, and bending, and that is used in electronic devices and household electrical appliances that require electromagnetic shielding. For example, the coated steel sheet used as a plasma display panel or a back panel for use in thin television sets, such as liquid crystal television sets, exhibits excellent electromagnetic shielding regardless of its large size.

A method for manufacturing a coated steel sheet according to the present invention will be described below. A coated steel sheet according to the present invention is manufactured by applying the chemical conversion treatment to both faces of a galvanized steel sheet, applying and heating the primer coat paint to form a primer coat if necessary, and applying and heating the paint composition at one face of the steel sheet.

A method for applying the paint composition is preferably, but not limited to, roll coater coating. After the paint composition is applied, the paint composition is subjected to heat treatment, such as hot-air drying, infrared heating, or induction heating, to crosslink the resin, thus forming a cured monolayer film. Preferably, the paint composition is heated at a temperature in the range of 170°C to 250°C (temperature of the steel sheet) for 20 to 90 seconds to form the monolayer film, thus manufacturing the coated steel sheet.

A heating temperature of less than 170°C is too low to proceed the crosslinking reaction, resulting in poor film performance. On the other hand, a heating temperature of more than 250°C causes thermal deterioration of the film, resulting in poor film performance. A treatment time of less than 20 seconds is too short to proceed the crosslinking reaction, resulting in poor film performance. On the other hand, a treatment time of more than 90 seconds results in excessive manufacturing costs. In a coated steel sheet according to the present invention, to further increase the corrosion resistance of the back side of the coated steel sheet, the paint composition for the organic resin layer is preferably applied to the back side of the steel sheet in the same way.

These embodiments of the present invention are illustrated by way of example, and various modifications can be made within the scope of the claims.

### EXAMPLES

Examples of the present invention will be described below.

### EXAMPLES 1 to 14 and COMPARATIVE EXAMPLES 1 to 3

The following steel sheets were prepared as galvanization steel sheets to be coated: electrolytic zinc-coated steel sheets (plating type: EG), galvannealed steel sheets (Fe content: 10% by mass, plating type: GA), hot-dip galvanized steel sheets (plating type: GI), hot-dip Zn-Al coated steel sheets (Al content: 4.5% by mass, plating type: GF), and electrolytic zinc-nickel alloy coated steel sheets after blackening treatment (Ni content: 12% by mass, plating type: EZNB). The thickness of these steel sheets was 0.5 mm. Table 1 shows the plating mass of the plated steel sheets. The plating mass and the plating composition on one face (front side) were the same as those on the other face (back side) of the plated steel sheets. After the plated steel sheets were degreased, the following treatments (i) to (iv) were performed to manufacture coated steel sheets.
(i) A chemical conversion solution was applied to the front side and was heated at a sheet temperature of 100°C to form a chemical conversion film having a composition indicated by No. 1 in Table 3.
(ii) A chemical conversion solution was applied to the back side and was subjected to heat treatment, in which the sheet temperature reached 200°C 30 seconds after the start, to form a chemical conversion film having a composition indicated by No. 2 in Table 3.
(iii) In Examples 12 to 14, a primer coat paint was applied to the front side and was subjected to heat treatment, in which the sheet temperature reached 210°C 30 seconds after the start, to form a primer coat (2 µm) shown in Table 4.
(iv) A paint composition having a composition shown in Table 1 was applied to the front side such that the dry film thickness shown in Table 1 was obtained. If necessary, an organic resin paint containing an anticorrosive pigment having a composition shown in Table 5 was applied to the back side. The steel sheet was then subjected to heat treatment, in which the sheet temperature reached 230°C 60 seconds after the start, to form a monolayer film on the front side and an organic resin layer on the back side, as shown in Tables 1 and 2.

Tables 1 and 2 show the compositions of the chemical conversion coating, the monolayer film, and the organic resin layer on the front side and the back side of the coated steel sheets thus manufactured.

The coated steel sheets thus manufactured were subjected to various tests. Evaluation methods in the present examples will be described below.

### <Evaluation of Front Side>

### (1) Glossiness

Sixty-degree specular gloss was measured with a specular reflection glossmeter according to JIS K 5600-4-7-1999.
Good: less than 20%
Fair: 20% or more but not more than 40%
Poor: 40% or more

### (2) Pencil Hardness

A "Uni" pencil (Mitsubishi Pencil Co., Ltd.) was pushed about 1 cm into a test surface at a speed of about 1 cm/s and an angle of about 45 degrees according to JIS K 5600-5-4: 1999. This test was performed five times with a pencil of constant hardness while the tip of the pencil was sharpened every test. The pencil hardness was identified by determining the maximum hardness at which no scratch was observed in at least three of five tests.
Good: 2H
Fair: H
Poor: F or softer

### (3) Press Formability

A test specimen having a diameter of 100 mm was punched out. The test specimen was formed into a truncated cone with a punch having a diameter of 50 mm and a radius of 4 mm and a die having a diameter of 70 mm and a radius of 4 mm at a blank holding pressure of 5 tons. The front side of the test specimen faced the punch. The press formability was identified by determining the height of the truncated cone at which a fracture occurred.
Excellent: 18 mm or more
Good: 16 mm or more but less than 18 mm
Fair: 14 mm or more but less than 16 mm
Poor: less than 14 mm

### (4) Bending Workability

Two test specimens were bent together while the back side of one test specimen faced the back side of the other test specimen. Different numbers of steel sheets having the same thickness as the test specimen were placed between the back sides to alter the distance between the back sides, that is, the bend radius R. The bending workability was identified by determining the maximum number of steel sheets at which no crack was observed on the front side of the test specimen.

The maximum number of steel sheets at which no crack was observed on the front side
Good: 0 to 1
Fair: 2 to 3
Poor: 4 or more

### (5) Film Adhesiveness After Processing

A cellophane adhesive tape (manufactured by Nichiban Co., Ltd.) was place on a bent portion of the test specimen (single) used in the evaluation of the bending workability. The film adhesiveness after processing was identified by determining the state of the bent portion after the cellophane adhesive tape was peeled off.
Good: No peeling of film
Poor: Peeling of film

### (6) Solvent Resistance

A film was rubbed with a gauze pad saturated with xylene at a load of 1 kg/cm² at 20°C. The solvent resistance was identified by determining the number of double rubs at which the underlying metal surface was exposed.
Good: underlying plated surface was not exposed at more than 100 double rubs
Fair: the maximum number of double rubs at which the underlying plated surface was not exposed was more than 50 but not more than 100
Poor: the maximum number of double rubs at which the underlying plated surface was not exposed was 50 or less

### (7) Weather Resistance

After a test according to JIS B 7753-1993 with a sunshine carbon arc weather meter for 288 hours, the 60-degree specular gloss of a test surface was measured. The weather resistance was identified by determining the gloss retention (%), which was calculated from the glosses before and after the test. The evaluation criteria were as follows:
Good: 60% or more
Poor: less than 60%

### (8) Chemical Resistance

After a test specimen whose back side and end faces were sealed was immersed in aqueous 5% by mass HCl at 20°C for 24 hours, the chemical resistance was identified by determining the area percentage of a remaining film.
Good: No peeling of film
Fair: the area percentage of a remaining film was less than 100% but not less than 50%
Poor: the area percentage of a remaining film was less than 50%

### (9) Stain Resistance

Magic ink (trade name) (red and black) was applied to a test specimen. After 24 hours, the ink was removed with a cloth saturated with ethanol. The stain resistance was visually identified by the appearance.
Good: no residual ink
Poor: presence of residual ink

### <Evaluation of Back Side>

### (10) Electrical Conductivity

The surface resistance of the back side of a coated steel sheet was measured with a low resistivity meter (Loresta GP, Mitsubishi Chemical Co., ESP probe). The load on the probe tip was increased at 20 g/s. The electrical conductivity was defined by the load at which the surface resistivity decreased to 10⁻⁴ ohms or less.

Load at which the surface resistivity decreased to 10⁻⁴ ohms or less
Excellent: average load of ten measurements was 300 g or less
Good: average load of ten measurements was more than 300 g but not more than 500g
Fair: average load of ten measurements was more than 500 g but not more than 700g
Poor: average load of ten measurements was 700 g or more

### (11) Corrosion Resistance

The four sides of a 50 mm x 80 mm test specimen were sealed. The test specimen was subjected to three salt spray cycles each consisting of 8-hour salt spray (JIS Z 2371-2000) and a 16-hour interval. The corrosion resistance was identified by determining the corrosion area ratio of a flat surface portion of the test specimen.

Corrosion area ratio
Excellent: 1% or less
Good: more than 1% but not more than 5%
Fair: more than 5% but not more than 20%
Poor: more than 20%

Table 6 shows the evaluation results.

Table 6 shows that the coated steel sheets according to Examples 1 to 14 have excellent bending workability, press formability, film appearance, pencil hardness, film adhesiveness after processing, solvent resistance, chemical resistance, stain resistance, weather resistance, electrical conductivity, and corrosion resistance. Furthermore, sufficient performance was achieved even with heat treatment for a short period of time. This demonstrated that the coated steel sheets are very suitable for high-speed production.

**Table 1**

| No. | Plated layer | | One face of steel sheet (front face) | | | | | | | | | | | | | | | |
|---|---|---|---|---|---|---|---|---|---|---|---|---|---|---|---|---|---|---|
| | Type | Plating mass (g/m²) | Chemical conversion coating | | Primer coat | | Monolayer film*³ | | | | | | | | | | | |
| | | | Composition (Table 3) | Thickness (µm) | Presence | Composition (Table 4) | Polyester resin*¹ | | Crosslinker | | Resin particles | | | | | Wax | | Film thickness (µm) |
| | | | | | | | Content (parts by mass) | Tg*² (°C) | Type | Content (parts by mass) | Resin type | Content (parts by mass) | Average particle size (µm) | Average particle size/film thickness*⁵ | Tg*² (°C) | Type | Content (parts by mass) | |
| Example 1 | EG | 30 | 1 | 0.2 | None | - | 60 | 60 | Melamine | 6 | Nylon | 12 | 10 | 2.0 | 120 | Polyethylene | 2 | 5 |
| Example 2 | GA | 40 | 1 | 0.2 | None | - | 60 | 60 | Melamine | 6 | Nylon | 12 | 10 | 2.0 | 120 | Polyethylene | 2 | 5 |
| Example 3 | GI | 60 | 1 | 0.2 | None | - | 60 | 60 | Melamine | 6 | Nylon | 12 | 10 | 2.0 | 120 | Polyethylene | 2 | 5 |
| Example 4 | GF | 60 | 1 | 0.2 | None | - | 60 | 60 | Melamine | 6 | Nylon | 12 | 10 | 2.0 | 120 | Polyethylene | 2 | 5 |
| Example 5 | EZNB | 20 | 1 | 0.2 | None | - | 60 | 60 | Melamine | 6 | Nylon | 12 | 10 | 2.0 | 120 | Polyethylene | 2 | 5 |
| Example 6 | EG | 30 | 1 | 0.2 | None | - | 60 | 60 | Isocyanate | 6 | Nylon | 12 | 10 | 2.0 | 120 | Polyethylene | 2 | 5 |
| Example 7 | EG | 30 | 1 | 0.2 | None | - | 60 | 60 | Urea | 6 | Nylon | 12 | 10 | 2.0 | 120 | Polyethylene | 2 | 5 |
| Example 8 | EG | 30 | 1 | 0.2 | None | - | 60 | 60 | Melamine | 6 | Acrylic | 12 | 3 | 0.6 | 120 | Polyethylene | 2 | 5 |
| Example 9 | EG | 30 | 1 | 0.2 | None | - | 60 | 60 | Melamine | 6 | Nylon | 12 | 15 | 1.5 | 120 | Polyethylene | 2 | 10 |
| Example 10 | EG | 30 | 1 | 0.2 | None | - | 60 | 60 | Melamine | 6 | Nylon | 12 | 10 | 2.0 | 120 | Polyethylene | 0 | 5 |
| Example 11 | EG | 30 | 1 | 0.2 | None | - | 60 | 60 | Melamine | 6 | Nylon | 12 | 10 | 2.0 | 120 | Polyethylene | 2 | 5 |
| Example 12 | EG | 30 | 1 | 0.2 | Present | 1 | 60 | 60 | Melamine | 6 | Nylon | 12 | 10 | 2.0 | 120 | Polyethylene | 2 | 5 |
| Example 13 | EG | 30 | 1 | 0.2 | Present | 1 | 60 | 75 | Melamine | 6 | Nylon | 12 | 20 | 2.8 | 120 | Polyethylene | 2 | 7 |
| Example 14 | EG | 30 | 1 | 0.2 | Present | 2 | 60 | 75 | Melamine | 6 | Nylon | 12 | 20 | 2.8 | 120 | Polyethylene | 2 | 7 |
| Comparative example 1 | EG | 30 | 1 | 0.2 | None | - | 60 | 60 | Melamine | 6 | - | 0 | - | - | - | Polyethylene | 2 | 5 |
| Comparative example 2 | EG | 30 | 1 | 0.2 | None | - | 60 | 60 | Melamine | 0 | Nylon | 12 | 20 | 4.0 | 120 | Polyethylene | 2 | 5 |
| Comparative example 3 | EG | 30 | 1 | 0.2 | None | - | 60 | 90*⁴ | Melamine | 6 | Acrylic | 12 | 3 | 0.6 | 90 | Polyethylene | 2 | 5 |

| | | | | | | | | | | | | | | | | | | |
|---|---|---|---|---|---|---|---|---|---|---|---|---|---|---|---|---|---|---|
| (Note) *1 Epoxy-modified polyester bisphenol A: 50% by mass (in polyhydric alcohol) Mn: 20000, hydroxyl value: 15, acid value: 5, Mn (number average molecular weight) was measured according to ASTN D-3536-91. *2 Tg: glass transition temperature (JIS K71214.2(2)) measured by heat-flux differential scanning calorimetry. *3 further containing an aluminum powder: 12 parts by mass and carbon black: 8 parts by mass. *4 An epoxy-modified polyester contains 90% by mass bisphenol A in a polyhydric alcohol. *5 Average particle size of resin particles/thickness of monolayer film | | | | | | | | | | | | | | | | | | |

**Table 2**

| No. | The other face of steel sheet (back face) | | | | |
|---|---|---|---|---|---|
| | Chemical conversion | | Organic resin layer | | |
| | Composition (Table 3) | Thickness (µm) | Resin type | Anticorrosive pigment type (Table 5) | Thickness (µm) |
| Example 1 | 2 | 0.2 | Epoxy | 1 | 0.5 |
| Example 2 | 2 | 0.2 | Epoxy | 1 | 0.5 |
| Example 3 | 2 | 0.2 | Epoxy | 1 | 0.5 |
| Example 4 | 2 | 0.2 | Epoxy | 1 | 0.5 |
| Example 5 | 2 | 0.2 | Epoxy | 1 | 0.5 |
| Example 6 | 2 | 0.2 | Epoxy | 1 | 0.5 |
| Example 7 | 2 | 0.2 | Epoxy | 1 | 0.5 |
| Example 8 | 2 | 0.2 | Epoxy | 1 | 0.5 |
| Example 9 | 2 | 0.2 | Epoxy | 1 | 0.5 |
| Example 10 | 2 | 0.2 | Epoxy | 1 | 0.5 |
| Example 11 | 1 | 0.2 | - | - | 0 |
| Example 12 | 2 | 0.2 | Epoxy | 1 | 0.5 |
| Example 13 | 3 | 0.1 | Epoxy | 1 | 0.3 |
| Example 14 | 3 | 0.1 | Epoxy | 1 | 0.3 |
| Comparative example 1 | 2 | 0.2 | Epoxy | 1 | 0.5 |
| Comparative example 2 | 2 | 0.2 | Epoxy | 1 | 0.5 |
| Comparative example 3 | 2 | 0.2 | Epoxy | 1 | 0.5 |

**Table 3**

| | |
|---|---|
| 1 | dry silica*¹⁾ 50 mass%, Zr compound*²⁾ 50 mass% |
| 2 | wet silica*³⁾ 50 mass%, phosphoric acid 20 mass%, Zr compound*²⁾ 30 mass% |
| 3 | Mn phosphate 49 mass%, wet silica*³⁾ 49 mass%, reduced V acid*⁶⁾ 2 mass% |

| | |
|---|---|
| *1) dry silica; Nippon Aerosil Co., Ltd., Aerosil #200 *2) Zr compound; Daiichi Kigenso Kagaku Kogyo Co., Ltd., ammonium zirconium carbonate *3) wet silica; Nissan Chemical Industries, Ltd., Snowtex 0 *6) contains quadrivalent V | |

**Table 4**

| | | |
|---|---|---|
| 1 | Epoxy-modified polyester resin (Tg: 75°C) | 80 mass% |
| | aluminum triphosphate*⁷⁾ | 10 mass% |
| | TiO₂ | 10 mass% |
| 2 | Epoxy-modified polyester resin (Tg: 75°C) | 65 mass% |
| | aluminum triphosphate*⁸⁾ | 20 mass% |
| | calcium exchanged silica | 5 mass% |
| | C black | 10 mass% |

| | | |
|---|---|---|
| *7) Ca-treated aluminum triphosphate; Tayca Co., K white #Ca650 *8) Mg-treated aluminum triphosphate (50 mass%)/Ca-treated aluminum triphosphate (50 mass%) mixture = Tayca Co., K white #G105/Tayca Co., K white #Ca650 | | |

**Table 5**

| | |
|---|---|
| 1 | Ca-exchanged silica*⁴⁾5 mass%, Mg-treated aluminum triphosphate*⁵⁾5% |

| | |
|---|---|
| *4) Ca-exchanged silica; GRACE DAVISON Shieldex C303 *5) Mg-treated aluminum triphosphate; Tayca Co., K white #G105 | |

**Table 6**

| | Performance evaluation of front face | | | | | | | | | Performance evaluation of back face | |
|---|---|---|---|---|---|---|---|---|---|---|---|
| | Gloss | Hardness | Press formability | Bending workability | Film adhesiveness after processing | Solvent resistance | Weather resistance | Chemical resistance | Stain resistance | Electrical conductivity | Corrosion resistance |
| Example 1 | Good | Good | Excellent | Good | Good | Good | Good | Fair | Good | Good | Good |
| Example 2 | Good | Good | Good | Fair | Good | Good | Good | Good | Good | Good | Good |
| Example 3 | Good | Good | Excellent | Good | Good | Good | Good | Good | Good | Good | Good |
| Example 4 | Good | Good | Excellent | Good | Good | Good | Good | Good | Good | Good | Good |
| Example 5 | Good | Good | Good | Fair | Good | Good | Good | Good | Good | Good | Good |
| Example 6 | Good | Good | Excellent | Good | Good | Fair | Good | Fair | Fair | Good | Good |
| Example 7 | Good | Good | Excellent | Good | Good | Good | Good | Fair | Fair | Good | Good |
| Example 8 | Good | Good | Excellent | Good | Good | Good | Good | Fair | Good | Good | Good |
| Example 9 | Good | Good | Excellent | Good | Good | Good | Good | Good | Good | Good | Good |
| Example 10 | Good | Good | Excellent | Good | Good | Good | Good | Good | Good | Good | Good |
| Example 11 | Good | Good | Excellent | Good | Good | Good | Good | Fair | Good | Excellent | Fair |
| Example 12 | Good | Good | Excellent | Good | Good | Good | Good | Good | Good | Good | Good |
| Example 13 | Good | Good | Good | Good | Good | Good | Good | Good | Good | Good | Excellent |
| Example 14 | Good | Good | Good | Good | Good | Good | Good | Good | Good | Good | Excellent |
| Comparative example 1 | Poor | Good | Poor | Good | Good | Good | Good | Good | Good | Good | Good |
| Comparative example 2 | Good | Poor | Fair | Good | Poor | Poor | Good | Poor | Poor | Good | Good |
| Comparative example 3 | Good | Good | Poor | Good | Good | Good | Good | Fair | Good | Good | Good |

According to the present invention, a coated steel sheet is produced by successively forming a galvanized layer and a chemical conversion coating free from chromium on both faces of a steel sheet, and forming a monolayer film on the chemical conversion coating at one face of the steel sheet, wherein the other face of the steel sheet is preferably electrically conductive. Thus, the present invention can provide a coated steel sheet that is resistant to film cracking in severe press working, such as drawing, can be produced at high speed, and has excellent bending workability, press formability, film adhesiveness after processing, solvent resistance, chemical resistance, stain resistance, weather resistance, electrical conductivity, and corrosion resistance, good surface appearance, and sufficient film hardness. The present invention can also provide a finished product, a panel for use in thin television sets, and a method for manufacturing the coated steel sheet.

## Claims

1. A coated steel sheet, comprising:
galvanized layers formed on a first face and a second face of a steel sheet;
chemical conversion coatings free from chromium formed on the galvanized layers formed on the first face and the second face in order to primarily improve the adhesion between the galvanized layer and the monolayer film; and a monolayer film formed on the chemical conversion coating on the first face side of the steel sheet, the monolayer film including a polyester resin cured with a cross-linker and resin particles having an average particle size in the range of 3 to 40 µm, a glass transition temperature Tg in the range of 70°C to 200°C, and a hardness, which is evaluated by the glass transition temperature Tg, wherein the hardness increases with increasing glass transition temperature Tg, higher than that of the polyester resin,
wherein the resin particles have an average particle size of more than 0.5 but not more than 2 times the thickness of the monolayer film and a glass transition temperature 20°C to 130°C higher than that of the polyester resin,
and wherein the term "average particle size of resin particles" refers to a mean value of average diameters of each resin particle observed in at least three fields in a cross-section of a film with an optical microscope, in which the average diameter of a resin particle is calculated from the maximum diameter and a diameter orthogonal to the maximum diameter of the particle, and the glass transition temperature is measured by heat-flux differential scanning calorimetry in accordance with JIS K71214.2(2).

2. The coated steel sheet according to Claim 1, wherein the chemical conversion coatings comprise finely divided silica and at least one selected from the group consisting of phosphoric acids and phosphate compounds.

3. The coated steel sheet according to Claim 1, wherein the monolayer film has a thickness of 10 µm or less.

4. The coated steel sheet according to Claim 2, wherein the monolayer film has a thickness in the range of 2 to 10 µm.

5. The coated steel sheet according to Claim 1, wherein the cross-linker is one selected from the group consisting of melamine resins, ureas, and isocyanates.

6. The coated steel sheet according to Claim 1, wherein the polyester resin is one selected from the group consisting of epoxy-modified polyester resins, urethane-modified polyesters, and acrylic polyesters.

7. The coated steel sheet according to Claim 6, wherein the polyester resin is an epoxy-modified polyester resin.

8. The coated steel sheet according to Claim 1, wherein the resin particles are formed of one selected from the group consisting of acrylic resins and nylon resins.

9. The coated steel sheet according to Claim 1, wherein the content of the resin particles in the monolayer film ranges from 5 % to 20 % by mass.

10. The coated steel sheet according to Claim 1, further comprising a primer coat between the chemical conversion coating and the monolayer film on the first face side of the steel sheet.

11. The coated steel sheet according to Claim 10, wherein the primer coat is formed by applying a primer coat paint to the chemical conversion coating, the primer coat paint including an anticorrosive pigment and a resin selected from the group consisting of polyester resins, epoxy-modified polyester resins, epoxy resins, phenoxy resins, and amine-modified epoxy resins.

12. The coated steel sheet according to Claim 10, wherein the primer coat has a thickness in the range of 1 to 5 µm.

13. The coated steel sheet according to Claim 1, further comprising an organic resin layer on the chemical conversion coating on the second face side of the steel sheet.

14. The coated steel sheet according to Claim 13, wherein the organic resin layer is formed of an epoxy resin, an amine-modified epoxy resin, or a polyester resin.

15. The coated steel sheet according to Claim 13, wherein the organic resin layer has a thickness in the range of 0.1 to 1 µm.

16. A finished product manufactured by pressing the coated steel sheet according to Claim 1 such that the first face of the coated steel sheet becomes a raised outer surface.

17. A panel for use in thin television sets, manufactured by pressing the coated steel sheet according to Claim 1 such that the first face of the coated steel sheet becomes a raised outer surface.

18. A method for manufacturing a coated steel sheet as described in any one of Claims 1 to 15, comprising the steps of:
forming a galvanized layer on a first face and a second face of a steel sheet;
forming a chemical conversion coating free from chromium on the galvanized layers formed on the first face and the second face in order to primarily improve the adhesion between the galvanized layer and the monolayer film;
applying a paint composition on the chemical conversion coating on the first face side of the steel sheet, the paint composition including a polyester resin, resin particles, and a cross-linker, the resin particles having an average particle size (as defined in claim 1) in the range of 3 to 40 µm, a glass transition temperature T_{g} (as defined in claim 1) in the range of 70°C to 200°C, and hardness,
which is evaluated by the glass transition temperature T_{g} , wherein the hardness increases with increasing glass transition temperature T_{g*'*} higher than that of the polyester resin,
wherein the resin particles have an average particle size of more than 0.5 but not more than 2 times the thickness of the monolayer film and a glass transition temperature T_{g} 20°C to 130°C higher than that of the polyester resin; and
heating the paint composition applied to the chemical conversion coating on the first face side of the steel sheet at a steel sheet temperature in the range of 170°C to 250°C for 20 to 90 seconds to form a cured monolayer film on the chemical conversion coating.

19. The method for manufacturing a coated steel sheet according to Claim 18, further comprising the step of forming a primer coat on the chemical conversion coating on the first face side of the steel sheet, between the step of forming chemical conversion coatings and the step of applying a paint composition.

## Patentansprüche

1. Beschichtetes Stahlblech, mit:
verzinkten Schichten, die auf einer ersten Fläche und einer zweiten Fläche eines Stahlblechs ausgebildet sind;
chemischen Umwandlungsbeschichtungen, die frei von Chrom sind, ausgebildet auf der ersten Fläche und der zweiten Fläche, um in erster Linie die Adhäsion zwischen den verzinkten Schichten und dem Monolagenfilm zu verbessern; und
einem Monolagenfilm, der auf der chemischen Umwandlungsbeschichtung auf der Seite der ersten Fläche des Stahlblechs ausgebildet ist, wobei der Monolagenfilm ein Polyesterharz, das mit einem Vernetzer gehärtet ist und Harzteilchen mit einer mittleren Teilchengröße im Bereich von 3 bis 40 µm, einer Glasübergangstemperatur Tg im Bereich von 70°C bis 200°C und einer Härte, die durch die Glasübergangstemperatur Tg evaluiert wird, wobei die Härte mit der Glasübergangstemperatur Tg zunimmt und größer ist als die des Polyesterharzes, enthält,
wobei die Harzpartikel eine mittlere Teilchengröße von mehr als 0,5 aber nicht mehr als 2-mal die Dicke des Monolagenfilms und eine Glasübergangstemperatur von 20°C bis 130°C höher als die des Polyesterharzes aufweisen,
und wobei sich der Ausdruck "mittlere Teilchengröße der Harzteilchen" auf einen Mittelwert von mittleren Durchmessern jedes Harzteilchen beobachtet in mindestens drei Feldern in einem Querschnitt eines Films mit einem optischen Mikroskop bezieht, in dem der mittlere Durchmesser eines Harzteilchens aus dem Maximaldurchmesser und einen Durchmesser orthogonal zu dem Maximaldurchmesser des Teilchens berechnet wird, und die Glasübergangstemperatur durch Wärmefluss-Differenz-Scan-Kalorimetrie in Übereinstimmung mit JIS K71214.2(2) bestimmt wird.

2. Beschichtetes Stahlblech nach Anspruch 1, wobei
die chemischen Umwandlungsbeschichtungen fein geteiltes Siliziumdioxid und mindestens eines ausgewählt aus der Gruppe bestehend aus Phosphorsäuren und Phosphatverbindungen aufweisen.

3. Beschichtetes Stahlblech nach Anspruch 1, wobei
der Monolagenfilm eine Dicke von 10 µm oder weniger aufweist.

4. Beschichtetes Stahlblech nach Anspruch 2, wobei
der Monolagenfilm eine Dicke im Bereich von 2 bis 10 µm aufweist.

5. Beschichtetes Stahlblech nach Anspruch 1, **dadurch gekennzeichnet, dass**
der Vernetzer eines ausgewählt aus der Gruppe bestehend aus Melaminharzen, Harnstoffen und Isocyanaten ist.

6. Beschichtetes Stahlblech nach Anspruch 1, wobei
das Polyesterharz eines ausgewählt aus der Gruppe bestehend aus epoxidmodifizierten Polyesterharzen, Urethanmodifizierten Polyestern und Acrylpolyestern ist.

7. Beschichtetes Stahlblech nach Anspruch 6, wobei
das Polyesterharz ein Epoxid-modifiziertes Polyesterharz ist.

8. Beschichtetes Stahlblech nach Anspruch 1, wobei
die Harzteilchen aus einem ausgewählt aus der Gruppe bestehend aus Acrylharzen und Nylonharzen ausgebildet sind.

9. Beschichtetes Stahlblech nach Anspruch 1, wobei
der Gehalt der Harzteilchen in dem Monolagenfilm im Bereich von 5 bis 20 Masse-% liegt.

10. Beschichtetes Stahlblech nach Anspruch 1, ferner mit
einer Grundierungsschicht zwischen der chemischen Umwandlungsbeschichtung und dem Monolagenfilm auf der Seite der ersten Fläche des Stahlblechs.

11. Beschichtetes Stahlblech nach Anspruch 10, wobei
die Grundierungsschicht durch Aufbringen einer Grundierungsschichtfarbe auf die chemische Umwandlungsbeschichtung ausgebildet wird, wobei die Grundierungsschichtfarbe ein Antikorrosionspigment und ein Harz ausgewählt aus der Gruppe bestehend aus Polyesterharzen, epoxidmodifizierten Polyesterharzen, Epoxidharzen, Phenoxyharzen und aminmodifizierten Epoxidharzen aufweist.

12. Beschichtetes Stahlblech nach Anspruch 10, wobei
die Grundierungsschicht eine Dicke im Bereich von 1 bis 5 µm aufweist.

13. Beschichtetes Stahlblech nach Anspruch 1, ferner mit
einer organischen Harzschicht auf der chemischen Umwandlungsbeschichtung auf der Seite der zweiten Fläche des Stahlblechs.

14. Beschichtetes Stahlblech nach Anspruch 13, wobei
die organische Harzschicht aus einem Epoxidharz, einem aminmodifizierten Epoxidharz oder einem Polyesterharz ausgebildet ist.

15. Beschichtetes Stahlblech nach Anspruch 13, wobei
die organische Harzschicht eine Dicke im Bereich von 0,1 bis 1 µm aufweist.

16. Fertigprodukt hergestellt durch Pressen des beschichteten Stahlblechs nach Anspruch 1 so, dass die erste Fläche des beschichteten Stahlblechs eine erhöhte Außenfläche wird.

17. Paneel zur Verwendung in dünnen Fernsehgeräten, hergestellt durch Pressen des beschichteten Stahlblechs nach Anspruch 1 so, dass die erste Fläche des beschichteten Stahlblechs eine erhöhte Außenfläche wird.

18. Verfahren zum Herstellen eines beschichteten Stahlblechs wie in einem der Ansprüche 1 bis 15 beschrieben, mit den Schritten:
Ausbilden einer verzinkten Schicht auf einer ersten Fläche und einer zweiten Fläche eines Stahlblechs;
Ausbilden einer chemischen Umwandlungsbeschichtung, die frei von Chrom ist, auf den verzinkten Schichten auf der ersten Fläche und der zweiten Fläche, um in erster Linie die Adhäsion zwischen den verzinkten Schichten und dem Monolagenfilm zu verbessern;
Aufbringen einer Farbzusammensetzung auf die chemische Umwandlungsbeschichtung auf der Seite der ersten Fläche des Stahlblechs, wobei die Farbzusammensetzung ein Polyesterharz, Harzteilchen und einen Vernetzer enthält, wobei die Harzteilchen eine mittlere Teilchengröße (wie in Anspruch 1 definiert) im Bereich von 3 bis 40 µm, eine Glasübergangstemperatur Tg (wie in Anspruch 1 definiert) im Bereich von 70°C bis 200°C und eine Härte, die durch die Glasübergangstemperatur Tg evaluiert wird, wobei die Härte mit der Glasübergangstemperatur Tg zunimmt und größer ist als die des Polyesterharzes, aufweisen,
wobei die Harzteilchen eine mittlere Teilchengröße von mehr als 0,5 aber nicht mehr als 2-mal die Dicke des Monolagenfilms und eine Glasübergangstemperatur Tg von 20°C bis 130°C höher als die des Polyesterharzes aufweisen; und
Erwärmen der Farbzusammensetzung, die auf die chemische Umwandlungsbeschichtung auf der Seite der ersten Fläche des Stahlblechs aufgebracht wurde, bei einer Stahlblechtemperatur im Bereich von 170°C bis 250°C für 20 bis 90 Sekunden, um einen gehärteten Monolagenfilm auf der chemischen Umwandlungsbeschichtung auszubilden.

19. Verfahren zum Herstellen eines beschichteten Stahlblechs nach Anspruch 18, ferner mit
dem Schritt des Ausbildens einer Grundierungsschicht auf der chemischen Umwandlungsbeschichtung auf der Seite der ersten Fläche des Stahlblechs zwischen dem Schritt des Ausbildens von chemischen Umwandlungsbeschichtungen und dem Schritt des Aufbringens eine Farbzusammensetzung.

## Revendications

1. Tôle d'acier revêtue, comprenant :
des couches galvanisées formées sur une première face et une seconde face d'une tôle d'acier ;
des revêtements de conversion chimique exempts de chrome formés sur les couches galvanisées formées sur la première face et la seconde face afin d'améliorer principalement l'adhérence entre la couche galvanisée et le film monocouche ; et
un film monocouche formé sur le revêtement de conversion chimique sur le côté de première face de la tôle d'acier, le film monocouche comprenant une résine de polyester durcie avec un agent de réticulation et des particules de résine ayant une taille particulaire moyenne dans la plage de 3 à 40 µm, une température de transition vitreuse Tg dans la plage de 70 °C à 200 °C et une dureté qui est évaluée par la température de transition vitreuse Tg, dans laquelle la dureté augmente à mesure qu'augmente la température de transition vitreuse Tg, plus élevée que celle de la résine de polyester,
dans laquelle les particules de résine ont une taille particulaire moyenne de plus de 0,5, mais de pas plus de 2 fois l'épaisseur du film monocouche et une température de transition vitreuse de 20 °C à 130 °C plus élevée que celle de la résine de polyester,
et dans laquelle l'expression « taille particulaire moyenne de particules de résine » fait référence à une valeur moyenne de diamètres moyens de chaque particule de résine observée dans au moins trois champs dans une coupe transversale d'un film avec un microscope optique, dans laquelle le diamètre moyen d'une particule de résine est calculé à partir du diamètre maximal et d'un diamètre orthogonal au diamètre maximal de la particule, et la température de transition vitreuse est mesurée par calorimétrie à balayage différentiel de flux thermique selon la norme JIS K71214.2(2).

2. Tôle d'acier revêtue selon la revendication 1, dans laquelle les revêtements de conversion chimique comprennent de la silice finement divisée et au moins un choisi dans le groupe constitué d'acides phosphoriques et de composés de phosphate.

3. Tôle d'acier revêtue selon la revendication 1, dans laquelle le film monocouche a une épaisseur de 10 µm ou moins.

4. Tôle d'acier revêtue selon la revendication 2, dans laquelle le film monocouche a une épaisseur dans la plage de 2 à 10 µm.

5. Tôle d'acier revêtue selon la revendication 1, dans laquelle l'agent de réticulation est choisi dans le groupe constitué de résines mélamines, d'urées et d'isocyanates.

6. Tôle d'acier revêtue selon la revendication 1, dans laquelle la résine de polyester est une choisie dans le groupe constitué de résines de polyester modifiées par époxy, de polyesters modifiés par uréthane et de polyesters acryliques.

7. Tôle d'acier revêtue selon la revendication 6, dans laquelle la résine de polyester est une résine de polyester modifiée par époxy.

8. Tôle d'acier revêtue selon la revendication 1, dans laquelle les particules de résine sont formées d'une choisie dans le groupe constitué de résines acryliques et de résines de Nylon.

9. Tôle d'acier revêtue selon la revendication 1, dans laquelle la teneur en particules de résine dans le film monocouche se situe dans une plage de 5 % à 20 % en masse.

10. Tôle d'acier revêtue selon la revendication 1, comprenant en outre une couche de fond entre le revêtement de conversion chimique et le film monocouche sur le côté de première face de la tôle d'acier.

11. Tôle d'acier revêtue selon la revendication 10, dans laquelle la couche de fond est formée en appliquant une peinture de couche de fond au revêtement de conversion chimique, la peinture de couche de fond comprenant un pigment anticorrosif et une résine choisie dans le groupe constitué de résines de polyester, de résines de polyester modifiées par époxy, de résines époxydes, de résines phénoxy et de résines époxydes modifiées par une amine.

12. Tôle d'acier revêtue selon la revendication 10, dans laquelle la couche de fond a une épaisseur dans la plage de 1 à 5 µm.

13. Tôle d'acier revêtue selon la revendication 1, comprenant en outre une couche de résine organique sur le revêtement de conversion chimique sur le côté de seconde face de la tôle d'acier.

14. Tôle d'acier revêtue selon la revendication 13, dans laquelle la couche de résine organique est formée d'une résine époxyde, d'une résine époxyde modifiée par une amine ou d'une résine de polyester.

15. Tôle d'acier revêtue selon la revendication 13, dans laquelle la couche de résine organique a une épaisseur dans la plage de 0,1 à 1 µm.

16. Produit fini fabriqué en comprimant la tôle d'acier revêtue selon la revendication 1 de sorte que la première face de la tôle d'acier revêtue devienne une surface externe en relief.

17. Panneau pour utilisation dans des appareils de télévision minces, fabriqué en comprimant la tôle d'acier revêtue selon la revendication 1 de sorte que la première face de la tôle d'acier revêtue devienne une surface externe en relief.

18. Procédé de fabrication d'une tôle d'acier revêtue selon l'une quelconque des revendications 1 à 15, comprenant les étapes consistant à :
former une couche galvanisée sur une première face et une seconde face d'une tôle d'acier;
former un revêtement de conversion chimique exempt de chrome sur les couches galvanisées formées sur la première face et la seconde face afin d'améliorer principalement l'adhérence entre la couche galvanisée et le film monocouche ;
appliquer une composition de peinture sur le revêtement de conversion chimique sur le côté de première face de la tôle d'acier, la composition de peinture comprenant une résine de polyester, des particules de résine et un agent de réticulation, les particules de résine ayant une taille particulaire moyenne (comme défini dans la revendication 1) dans la plage de 3 à 40 µm, une température de transition vitreuse Tg (comme défini dans la revendication 1) dans la plage de 70 °C à 200 °C et une dureté qui est évaluée par la température de transition vitreuse Tg, dans lequel la dureté augmente à mesure qu'augmente la température de transition vitreuse Tg, plus élevée que celle de la résine de polyester,
dans lequel les particules de résine ont une taille particulaire moyenne de plus de 0,5, mais de pas plus de 2 fois l'épaisseur du film monocouche et une température de transition vitreuse Tg de 20 °C à 130 °C plus élevée que celle de la résine de polyester ; et
chauffer la composition de peinture appliquée au revêtement de conversion chimique sur le côté de première face de la tôle d'acier à une température de tôle d'acier dans la plage de 170 °C à 250 °C pendant 20 à 90 secondes pour former un film monocouche durci sur le revêtement de conversion chimique.

19. Procédé de fabrication d'une tôle d'acier revêtue selon la revendication 18, comprenant en outre l'étape de formation d'une couche de fond sur le revêtement de conversion chimique sur le côté de première face de la tôle d'acier, entre l'étape de formation de revêtements de conversion chimique et l'étape d'application d'une composition de peinture.
